# EUROPEAN PATENT APPLICATION

(11) **EP 2 271 101 A1**
(43) Date of publication of application: **05.01.2011**
(21) Application number: 09731732.5
(22) Date of filing: 08.04.2009
(51) Int. Cl.: H04N 7/18, G06T 1/00

(54) **IMAGING POSITION DETERMINATION METHOD AND IMAGING POSITION DETERMINATION DEVICE**

(30) Priority: 17.04.2008 JP 2008107772
(71) Applicant: Panasonic Corporation, Kadoma-shi Osaka 571-8501 (JP)
(72) Inventor: KANDA, Osamu, Chuo-ku Osaka-shi Osaka 540-6207 (JP); SATO, Masaaki, Chuo-ku Osaka-shi Osaka 540-6207 (JP); MIYANISHI, Katsuya, Chuo-ku Osaka-shi Osaka 540-6207 (JP); TAKENAKA, Shinji, Chuo-ku Osaka-shi Osaka 540-6207 (JP); MICHIMOTO, Yasuyuki, Chuo-ku Osaka-shi Osaka 540-6207 (JP)
(74) Representative: Kügele, Bernhard
(86) International application number: PCT/JP2009/001643
(87) International publication number: WO 2009/128223

(57) **Abstract**

The present invention provides an imaging position determining method and an imaging position determining device capable of determining an imaging position in a sequential imaging operation even in using a general camera not having a function to output information on movement and imaging positions of the camera.

It is determined whether a camera (10) is resting in any of a plurality of imaging positions employed for a sequential imaging operation, and when it is determined that the camera (10) is resting, an image picked up by the camera (10) in a current imaging position is compared with previously stored background reference images, and the current imaging position is determined by using correlation calculated values between the compared images. Thus, even when a general camera not having a function to output information on the movement and the imaging positions of the camera (10) is used, the imaging position in the sequential imaging operation can be determined.

## Description

### Technical Field

The present invention relates to an imaging position determining method and an imaging position determining device suitably used in an intruder detection system including a camera for performing a sequential imaging operation while rounding a plurality of predetermined imaging positions.

### Background Art

A conventional intruder detection system including the camera switches channels of an image sensor corresponding to the sequential operation based on information on moving timing and a moved position of the camera output from the camera. The image sensor is a sensor for detecting an object that moves (hereinafter referred to as a moving object).

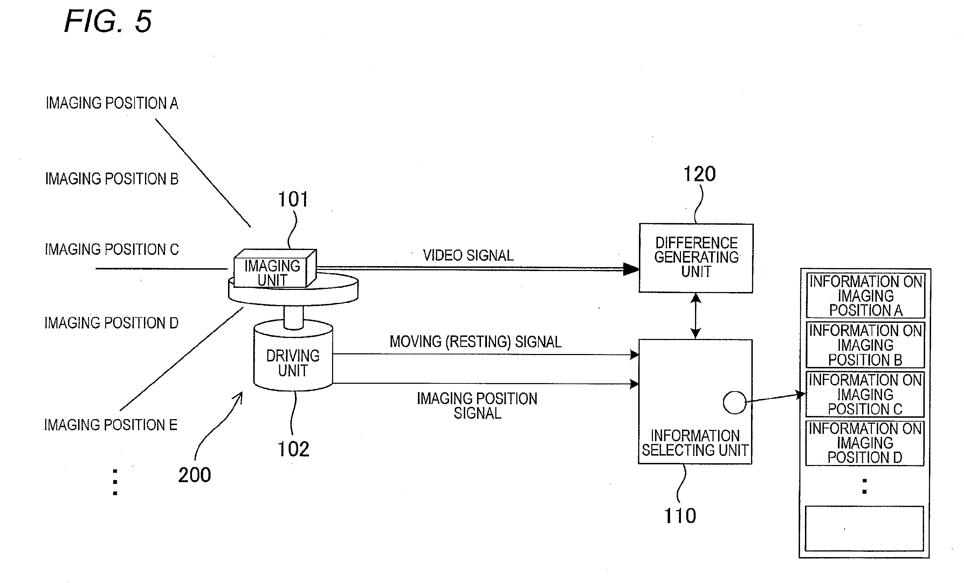

FIG. 5 is a block diagram schematically illustrating the structure of the conventional intruder detection system. In FIG. 5, a camera 200 includes an imaging unit 101 having an imaging device such as a CMOS (Complementary Metal Oxide Semiconductor) or a CCD (Charge Coupled Device), and a driving unit 102 for performing zooming adjustment of the imaging unit 101 and changing the direction of the imaging unit 101 for panning/tilting.

In the camera 200, a plurality of imaging positions can be set, and the direction of the camera is changed successively to the set plural imaging positions. In FIG. 5, five imaging positions A through E are set, and the direction of the camera is changed successively from the imaging position A to the imaging position E. After changing the imaging position to the imaging position E, a similar operation is repeated again successively from the imaging position A. In other words, the camera performs a rounding operation. This rounding operation corresponds to a sequential imaging operation. During the sequential imaging operation, a moving (resting) signal and an imaging position signal are output from the driving unit 102 to be input to an information selecting unit 110. The information selecting unit 110 switches a channel of an image sensor based on the moving (resting) signal and the imaging position signal supplied from the driving unit 102. For example, when the camera 200 is in the imaging position C, the information selecting unit 110 switches a channel of the image sensor to one corresponding to the imaging position C.

The imaging unit 101 of the camera 200 outputs a video signal. The video signal is input to a difference generating unit 120. The difference generating unit 120 serves as the image sensor, and performs processing in accordance with a background subtraction method. Specifically, based on the video signal output from the imaging unit 101 of the camera 200, a difference from a background reference image corresponding to the sequential imaging operation of the camera 200 is generated. The background subtraction method is a method for detecting an area of a moving body by subtracting a previously created background image from a current frame image. When the imaging position of the camera 200 is, for example, the position "C", an area of a moving body is detected by obtaining a difference of an image obtained in the imaging position C from an image obtained in a previous round (i.e., a background reference image). The background reference image used at this point is present in a channel allocated to information on the imaging position C.

On the other hand, in the case where the conventional intruder detection system includes a plurality of cameras, each camera is provided with a frame code of each frame, so that the number of cameras can be recognized based on the number of rounding the frame codes (see, for example, Patent Document 1).

### Related Art Documents

### Patent Document

Patent Document 1: JP-A-2003-009080

### Disclosure of the Invention

### Problem to be Solved by the Invention

In the conventional intruder detection system, however, an imaging position in the sequential imaging operation can not be determined unless the camera has a function to output information on the movement and the imaging positions of the camera. Furthermore, the information on the movement and the imaging positions of the camera defers depending upon a manufacturer of the camera. In other words, there is a restriction in the structure of the system.

The present invention was made in consideration of the circumstances, and an object thereof is to provide an imaging position determining method and an imaging position determining device in which an imaging position in the sequential imaging operation can be determined even in using a general camera not having a function to output information on the movement and imaging positions of the camera or a camera manufactured by a different manufacturer.

### Means for Solving the Problem

An imaging position determining method according to the invention comprises an imaging step of acquiring images by picking up images in a plurality of predetermined imaging positions by imaging means; and an imaging position determining step of comparing an image picked up by the imaging means in any of the imaging positions with previously stored images, and determining a current imaging position by using a correlation calculated values obtained between the compared images.

According to this method, the image picked up by the imaging means in any of the imaging positions is compared with the previously stored images, so as to determine the current imaging position by using the correlation calculated values between the compared images. Therefore, even when a general camera not having a function to output information on movement and imaging positions of the camera is used, the imaging position can be determined.

In the method, the imaging means picks up the images by performing a sequential imaging operation while rounding the plurality of imaging positions.

According to this method, since the imaging means picks up the images by performing the sequential imaging operation while rounding the plurality of imaging positions, the imaging position in the sequential imaging operation can be determined even when a general camera not having the function to output the information on movement and imaging positions of the camera is used as the imaging means.

The method further includes a rest determining step of determining whether the imaging means is resting in any of the plurality of imaging positions, and when the imaging means is determined to be resting in the rest determining step, the image picked up by the imaging means in any of the imaging positions is compared with the previously stored images.

According to this method, it is determined whether or not the imaging means is resting in any of the plurality imaging positions, and when it is determined that the imaging means is resting, the image picked up by the imaging means in any of the imaging positions is compared with the previously stored images. Therefore, the imaging position can be determined even when a general camera not having the function to output the information on movement and imaging positions of the camera is used as the imaging means.

The method further includes a moving object detecting step of detecting a moving object by using a background image corresponding to the current imaging position determined in the imaging position determining step.

According to this method, since a moving object is detected by using a background image corresponding to the current position, an intruder can be detected in, for example, an intruder detection system.

In the method, when the image picked up by the imaging means in any of the imaging positions is compared with the previously stored images in the imaging position determining step, noise included in the compared images are reduced.

According to this method, in comparing the image picked up by the imaging means in any of the imaging positions with the previously stored images, the noise included in the compared images are reduced, and therefore, the correlation calculated values can be highly precisely obtained.

In the method, when the image picked up by the imaging means in any of the imaging positions is compared with the previously stored images in the imaging position determining step, matching of feature points included in the compared images are performed for correcting a shift between pixels of the compared images.

According to this method, in comparing the image picked up by the imaging means in any of the imaging positions with the previously stored images, the shift between the pixels of the compared images is corrected by performing matching of the feature points included in the images with each other, and therefore, the correlation calculated values can be highly precisely obtained.

In the method, the previously stored images used in the imaging position determining step are successively updated to a latest image.

According to this method, since the previously stored images are always updated, the correlation calculated values can be always highly precisely obtained.

In the method, when the correlation calculated values are smaller than a prescribed value in the imaging position determining step, neither update of the previously stored image nor detection of a moving object by using a background image is performed.

According to this method, when the correlation calculated values between the image picked up by the imaging means in any of the imaging positions and the previously stored image is smaller than the prescribed value, neither the update of the previously stored image nor the detection of a moving object by using a background image is performed, and hence, an error detection can be prevented.

An imaging position determining device according to the invention comprises imaging means for acquiring images by picking up images in a plurality of predetermined imaging positions; and imaging position determining means for comparing the images picked up by the imaging means with previously stored images and determining a current imaging position by using correlation calculated values obtained between the compared images.

According to this device, the image picked up by the imaging means in any of the imaging positions is compared with the previously stored images, so as to determine the current imaging position by using the correlation calculated values between the compared images, and therefore, even when a general camera not having a function to output information on movement and imaging positions of the camera is used as the imaging means, the imaging position can be determined.

### Advantages of the Invention

According to the present invention, an imaging position in the sequential imaging operation can be determined even in using a general camera not having a function to output information on movement and imaging positions of the camera.

### Brief Description of the Drawings

FIG. 1 is a block diagram schematically illustrating the structure of an intruder detection system according to an embodiment of the invention.
FIG. 2 is a flowchart of a function (a main function) used in main processing of the intruder detection system of FIG. 1.
FIG. 3 is a flowchart of a sequential processing function of FIG. 2.
FIG. 4 is a diagram obtained by graphing correlation calculated values obtained against background reference images in the intruder detection system of FIG. 1.
FIG. 5 is a block diagram schematically illustrating the structure of a conventional intruder detection system.

### Best Mode for Carrying Out the invention

Now, a preferred embodiment for practicing the present invention will be described in detail with reference to the accompanying drawings.

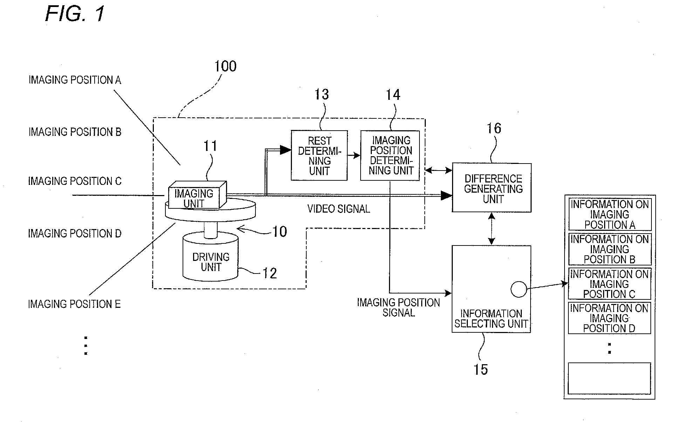

FIG. 1 is a block diagram schematically illustrating the structure of an intruder detection system according to an embodiment of the invention. In FIG. 1, the intruder detection system of the embodiment includes a camera 10, a rest determining unit 13, an imaging position determining unit 14, an information selecting unit 15 and a difference generating unit 16. The camera 10 includes an imaging unit 11 having an imaging device such as a CMOS or a CCD and a driving unit 12 for performing zooming adjustment of the imaging unit 11 and changing the direction of the imaging unit 11 for panning/tilting.

The imaging unit 11 of the camera 10 is similar to the imaging unit 101 of the camera 200 described above (illustrated in FIG. 5) but does not have a function to output a moving (resting) signal and an imaging position signal differently from the imaging unit 102 of the camera 200. In other words, the camera 10 is not a special camera but a general camera. A video signal supplied from the imaging unit 11 of the camera 10 is input to the difference generating unit 16 and the rest determining unit 13. The rest determining unit 13 determines whether or not the camera 10 is resting in any of a plurality of imaging positions A, B, C, etc. In this case, the determination for the rest is made by collating pixel information of an image.

When the rest determining unit 13 determines that the camera 10 is resting, the imaging position determining unit 14 compares an image picked up by the camera 10 in the current imaging position with previously stored images (i.e., background reference images), so as to determine the current imaging position on the basis of correlation calculated values obtained between the compared images. Thereafter, the imaging position determining unit 14 converts the determined current imaging position into an imaging position signal and inputs the imaging position signal to the information selecting unit 15 and the difference generating unit 16. The imaging position determining unit 14 has a low-pass filter (not shown) for noise reduction, so as to reduce high-frequency components of the images in comparing the pickup image and the background reference images when the rest determining unit 13 determines that the camera 10 is resting. Furthermore, in comparing the pickup image and the background reference images when the rest determining unit 13 determines that the camera 10 is resting, the imaging position determining unit 14 performs matching of feature points (such as edge portions) of the compared images with each other, so as to correct a shift between pixels included in the images. Moreover, the imaging position determining unit 14 updates each stored image, namely, each background reference image, successively to a latest image. Through such noise reduction processing, pixel shift correction processing and stored image update processing, a correlation calculated value can be highly precisely obtained. It is noted that prescribed areas may be compared with each other in correcting the shift of the pixels.

The information selecting unit 15 switches a channel of an image sensor on the basis of an imaging position signal corresponding to the current imaging position of the camera 10 determined by the imaging position determining unit 14. When the camera 10 is, for example, in the imaging position C, the information selecting unit 15 switches a channel of the image sensor to one corresponding to the imaging position C. The difference generating unit 16 corresponds to the image sensor, which detects a moving object in accordance with the background subtraction method. Specifically, a difference between a pickup image obtained in the current imaging position determined by the imaging position determining unit 14 and a background reference image corresponding to this imaging position is generated so as to detect an area of the moving object. When the imaging position of the camera 10 is, for example, "C", a difference between an image obtained in this imaging position and a background reference image corresponding to this imaging position is generated, so as to detect an area of a moving object. A background reference image is an image obtained in a previous round. When the correlation calculated value obtained by the imaging position determining unit 14 is smaller than a prescribed value (i.e., a threshold value), the difference generating unit 16 performs neither update of a background reference image nor detection of a moving object by using a background reference image.

It is noted that the camera 10, the rest determining unit 13 and the imaging position determining unit 14 together form an imaging position determining device 100.

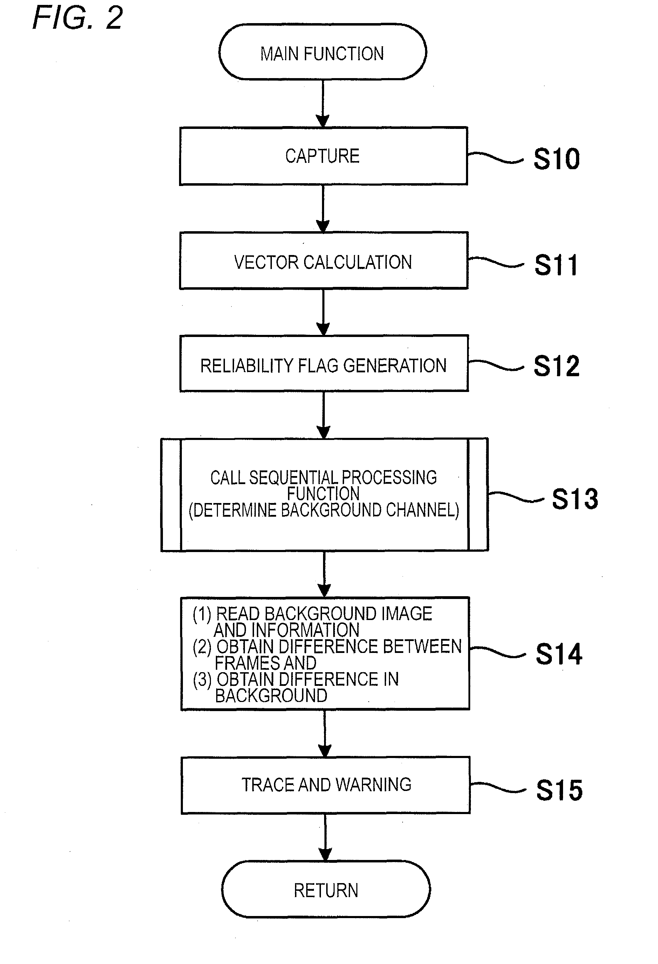

Next, the operation of the intruder detection system of this embodiment will be described. FIG. 2 is a flowchart of a function (a main function) employed for performing main processing of the intruder detection system of the embodiment. In FIG. 2, a video signal output from the imaging unit 11 is captured (step S10), and vector calculation for calculating a moving direction of an image is performed (step S11). Subsequently, it is determined whether or not the moving direction of the image is reliable, and when the reliability is high, a reliable flag is generated (step S12). Specifically, the reliability is determined to be low when moving directions of a plurality of macro blocks do not accord with one another, and the reliability is determined to be high when the moving directions accord with one another, and when the reliability is determined to be high, the reliability flag is generated.

After performing processing for generating the reliability flag, a sequential processing function is called, and a background channel is determined (step S13). Specifically, it is determined which imaging position a current image corresponds to. The sequential processing function will be described later in detail. After performing the processing for determining the background channel, a background reference image and various information (such as a "template", a "motion vector", a "moving direction" and a "threshold value") are read, so as to detect an area of a moving object by obtaining a difference between frames and a difference in background (step S14). Then, the moving object is traced and warned of by detecting the area of the moving object (step S15).

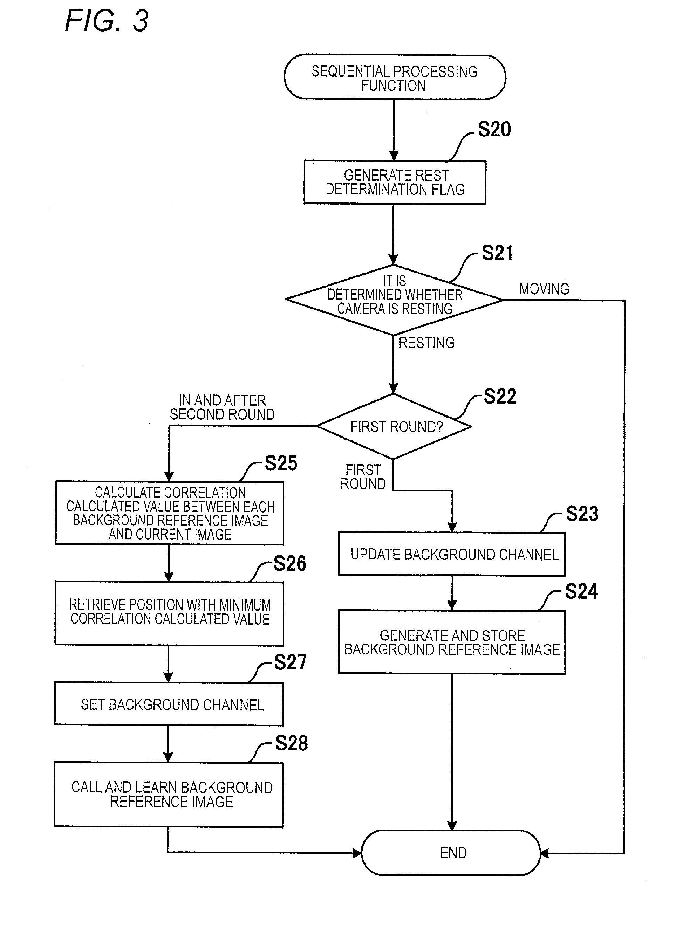

FIG. 3 is a flowchart of the sequential processing function mentioned above. In FIG. 3, a rest determination flag corresponding to a flag used for determining rest of the camera is generated (step S20), it is determined on the basis of the generated rest determination flag whether or not the camera is resting (step S21), and when the camera 10 is moving, this processing is terminated. When the camera 10 is resting, it is determined whether or not the movement around the imaging positions of the camera 10 is the first round (step S22). When the movement around the imaging positions of the camera 10 is the first round, a background channel is updated (step S23), and successively, a background reference image is generated to be stored (step S24). After this procedure, the processing is terminated.

After the first round of the movement around the imaging positions of the camera 10, it is determined that the movement is the second round or after that (step S22), and a correlation calculated value (such as a SAD (Sum of Absolute Difference) calculated value) between each of stored background reference images and an image picked up by the camera 10 (namely, a current image) is calculated (step S25). Then, by using correlation calculated values corresponding to the respective background reference images, an imaging position corresponding to the minimum correlation calculated value is retrieved (step S26). It can be determined that the background reference image with the minimum correlation calculated value is the same image as the current image. Incidentally, when the background reference image and the current image completely accord with each other, the correlation calculated value is zero (in using the SAD calculated value).

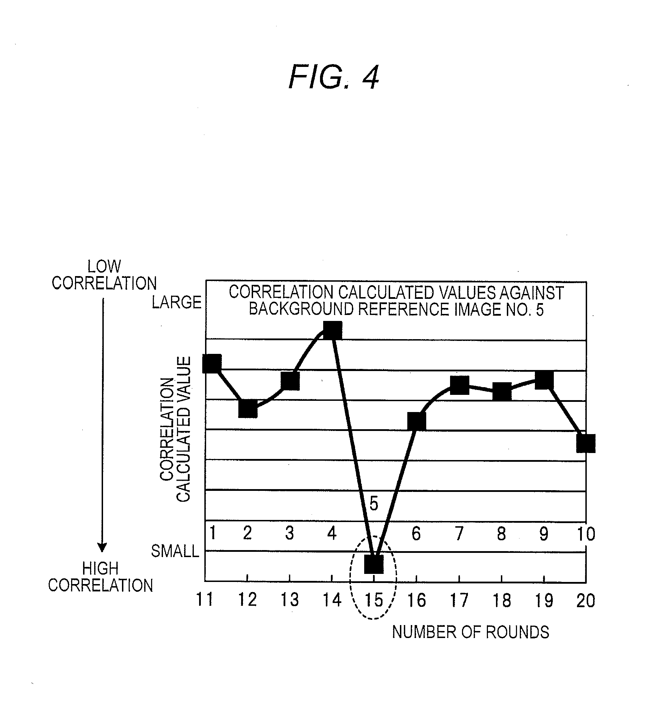

At this point, FIG. 4 is a diagram obtained by graphing correlation calculated values obtained against the respective background reference images. The abscissa indicates the number of rounds and the ordinate indicates the correlation calculated value (such as the SAD calculated value). The correlation calculated value is larger in the upward direction of the graph and is smaller in the downward direction. Imaging positions are 10 positions, which are rounded by changing the imaging position of the camera 10 successively from the position 1 to the position 10. Since background reference images are acquired in the first round, correlation with a current image is obtained from the second round. In this diagram, since the correlation calculated value is the minimum (namely, the correlation is the maximum) in the round with the number of 15, the current image accords with an image obtained in the position 5, and therefore, it is found that the camera 10 is resting in the fifth imaging position.

Referring to FIG. 3 again, when the imaging position with the minimum correlation calculated value is retrieved, a background channel is set (step S27). When the camera 10 is, for example, in the imaging position C, the background channel is switched to a channel of the image sensor corresponding to the imaging position C. After setting the background channel, the background reference image is called to be learned (step S28). Specifically, when the correlation calculated value is not zero, there is a slight difference between the images, and hence, the difference is corrected. After learning the background reference image, this processing is terminated.

In this manner, according to the intruder detection system of this embodiment, it is determined whether or not the camera 10 is resting in any of a plurality of imaging positions employed for performing the sequential imaging operation, and when it is determined that the camera 10 is resting, an image picked up by the camera 10 in the current imaging position is compared with background reference images previously stored, so as to determine the current imaging position by using correlation calculated values obtained between the compared images, and therefore, even when a general camera not having a function to output information on movement and imaging positions of the camera 10 is used, the imaging position in the sequential imaging operation can be determined. Furthermore, a moving object is detected by using a background image corresponding to the current position, and hence, an intruder can be detected in application to, for example, the intruder detection system.

Moreover, in comparing the image picked up by the camera 10 in the imaging position in determining that the camera 10 is resting with the previously stored background reference images, high-frequency components of these images are reduced, and hence, the correlation calculated values can be highly precisely obtained.

In addition, in comparing the image picked up by the camera 10 in the imaging position at a time of determining the resting of the camera 10 with the previously stored background reference images, matching of feature points included in these images are performed for correcting a shift between pixels of the images, and therefore, the correlation calculated values can be highly precisely obtained.

Moreover, since the previously stored background reference images are always updated, the correlation calculated values can be always highly precisely obtained.

Furthermore, when the correlation calculated values obtained between the image picked up by the camera 10 in the imaging position at a time of determining the resting of the camera 10 and the previously stored background reference images are smaller than a prescribed value, neither update of the background reference images nor detection of a moving object by using a background reference image is performed, and hence, error detection can be prevented.

Moreover, in the intruder detection system of this embodiment, since the determination can be made by rounding from an image picked up by the camera 10, the number of cameras can be recognized without using frame codes.

It is noted that any of the following functions may be additionally provided:
(1) A table is created with respect to each of the imaging positions, so as to perform the operation on the basis of statistic;
(2) Special display is performed, for example, so that an image obtained in an imaging position where warning has been issued in the past in accordance with statistical information on past warning may be displayed with a red border around it; and
(3) In applying the invention to a camera body, dwell time (rest imaging time) in each imaging position is varied in accordance with the statistical information on the past warning.

Although the present invention has been described in detail by referring to the specific embodiment, it is matter of course that changes and modification may be made without departing from the spirit or scope of the invention.

The present application is based on Japanese Patent Application filed on April 17, 2008 (Japanese Patent Application No. 2008-107772), the entire contents of which are herein incorporated by reference.

### Industrial Applicability

The present invention provides advantages such that a general camera not having a function to output information on movement and imaging positions of the camera can be used for determining an imaging position in the sequential imaging operation, and is applicable to an intruder detection system and the like.

### Description of Reference Signs

- 10: camera
- 11: imaging unit
- 12: driving unit
- 13: rest determining unit
- 14: imaging position determining unit
- 15: information selecting unit
- 16: difference generating unit
- 100: imaging position determining device

## Claims

1. An imaging position determining method comprising:
an imaging step of acquiring images by picking up images in a plurality of predetermined imaging positions by imaging means; and
an imaging position determining step of comparing an image picked up by the imaging means in any of the imaging positions with previously stored images, and determining a current imaging position by using a correlation calculated values obtained between the compared images.

2. The imaging position determining method according to claim 1, wherein the imaging means picks up the images by performing a sequential imaging operation while rounding the plurality of imaging positions.

3. The imaging position determining method according to claim 1 or 2, further comprising a rest determining step of determining whether the imaging means is resting in any of the plurality of imaging positions,
wherein when the imaging means is determined to be resting in the rest determining step, the image picked up by the imaging means in any of the imaging positions is compared with the previously stored images.

4. The imaging position determining method according to any one of claims 1 to 3, further comprising a moving object detecting step of detecting a moving object by using a background image corresponding to the current imaging position determined in the imaging position determining step.

5. The imaging position determining method according to any one of claims 1 to 4, wherein when the image picked up by the imaging means in any of the imaging positions is compared with the previously stored images in the imaging position determining step, noise included in the compared images are reduced.

6. The imaging position determining method according to any one of claims 1 to 5, wherein when the image picked up by the imaging means in any of the imaging positions is compared with the previously stored images in the imaging position determining step, matching of feature points included in the compared images are performed for correcting a shift between pixels of the compared images.

7. The imaging position determining method according to any one of claims 1 to 6, wherein the previously stored images used in the imaging position determining step are successively updated to a latest image.

8. The imaging position determining method according to any one of claims 1 to 7, wherein when the correlation calculated values are smaller than a prescribed value in the imaging position determining step, neither update of the previously stored image nor detection of a moving object by using a background image is performed.

9. An imaging position determining device comprising:
imaging means for acquiring images by picking up images in a plurality of predetermined imaging positions; and
imaging position determining means for comparing the images picked up by the imaging means with previously stored images and determining a current imaging position by using correlation calculated values obtained between the compared images.
